# EUROPÄISCHE PATENTSCHRIFT

(11) **EP 1 142 763 B1**
(45) Veröffentlichungstag und Bekanntmachung des Hinweises auf die Patenterteilung: **06.10.2004**
(21) Anmeldenummer: 01107779.9
(22) Anmeldetag: 04.04.2001
(51) Int. Cl.: B60R 22/40, B60R 22/405

(54) **Trägheitssensor, Gurtaufroller, und Spritzgiessformen zum Giessen eines Trägers und eines Sensorhebels für einen Trägheitssensor**
Inertial sensor, belt retractor and injection mold for molding a support and a sensor lever for an inertial sensor
Détecteur inertiel, rétracteur de sangle, et moules à injection pour mouler un support et un levier pivotant d'un détecteur inertiel

(30) Priorität: 06.04.2000 DE 20006314 U
(43) Veröffentlichungstag der Anmeldung: 10.10.2001
(73) Patentinhaber: TRW Automotive GmbH, 73553 Alfdorf (DE)
(72) Erfinder: Kielwein, Thomas, 73569 Eschach (DE); Rink, Jürgen, 73550 Waldstetten (DE); Schmid, Johannes, 73527 Schwäbisch Gmünd (DE)
(74) Vertreter: Sties, Jochen, Dipl.-Ing.

(56) Entgegenhaltungen:
- US-A- 4 050 644
- US-A- 4 978 087
- US-A- 5 622 383

## Beschreibung

Die Erfindung betrifft einen Trägheitssensor nach den Oberbegriff des Anspruch 1. Die Erfindung betrifft weiterhin einen Gurtaufroller mit einem Gehäuse und einem derartigen Trägheitssensor sowie eine Spritzgießform zur Herstellung eines Trägers und eine Spritzgießform zur Herstellung eines Sensorhebels für einen derartigen Trägheitssensor.

Die Wirkung eines derartigen Trägheitsensors beruht darauf, daß der Massekörper, der auf dem Träger unter der Wirkung seiner Schwerkraft aufliegt, bei einer Beschleunigung des Sensors quer zur Schwerkraft infolge seiner Massenträgheit aus seiner Ruhelage herausbewegt wird und dabei den Sensorhebel so auslenkt, daß dieser mit dem Kontaktabschnitt seiner Steuerklinke beispielsweise in die Verzahnung der Steuerscheibe des Gurtaufrollers eingreift und diese blockiert. Damit der Sensor ordnungsgemäß funktioniert, muß der Sensor im Fahrzeug bezüglich der Horizontalen so montiert sein, daß der Massekörper seine Ruhelage einnimmt, d.h. der Sensorhebel nicht ausgelenkt ist, wenn auf den Massekörper nur die Schwerkraft und keine weitere Trägheitskraft wirkt. Der Trägheitssensor ist im Gehäuse des Gurtaufrollers angebracht, und die Einbaulage des Gurtaufrollers kann bei jedem Fahrzeug verschieden sein. Daher muß für jeden Fahrzeugtyp mit einer anderen Einbaulage des Gurtaufrollers entweder die Befestigung des Sensors im Gehäuse geändert oder ein veränderter Sensor vorgesehen werden. Dies ist in jedem Falle unerwünscht, da eine Veränderung der Konstruktion mit erheblichem Zeit- und Kostenaufwand verbunden ist.

Aus der US 5 622 383 ist ein Trägheitssensor der eingangs genannten Art bekannt, beidem die Achse der kreiszylindrischen Fläche durch den Kontaktabschritt der Steuerklinke verläuft.

Die Erfindung schafft einen Trägheitssensor der eingangs genannten Art, der so gestaltet ist, daß er in einfachster Weise für verschiedene Einbaulagen desselben Gehäuses herstellbar ist.

Zu diesem Zweck ist ein Trägheitssensor mit den Merkmale des Anspruchs 1 vorgesehen. Damit ist es möglich, den Ansatz unter verschiedenen Winkeln am Träger anzubringen. Da die vorgesehene Einbaulage des Gehäuses des Gurtaufrollers die Orientierung des Ansatzes bestimmt, mit welchem der Sensor im Gehäuse befestigt ist, muß der Ansatz unter einem bestimmten Winkel am Träger angebracht sein, so daß dieser die für die Funktion des Sensors notwendige Lage bezüglich der Horizontalen einnehmen kann.

In einer vorteilhaften Weiterbildung der Erfindung ist vorgesehen, daß der Sensorhebel mit einer kreiszylindrischen Fläche versehen ist, deren Achse parallel zur Schwenkachse durch den Schwerpunkt des Massekörpers verläuft und an welcher die Steuerklinke angebracht ist. Dies ermöglicht es, auch die Steuerklinke am Sensorhebel unter verschiedenen Winkeln anzubringen, wodurch sich auch für den Sensorhebel dieselben Vorteile ergeben wie für den Träger.

Weiterhin schafft die Erfindung einen Gurtaufroller mit einem Gehäuse und einem erfindungsgemäßen Trägheitssensor, dessen Ansatz bezüglich seiner Längsachse zylindrisch ist, wobei in dem Gehäuse eine Ausnehmung vorgesehen ist, in welcher der Ansatz des Sensors um seine Längsachse drehbar gelagert ist. Dadurch wird es möglich, den Sensor nach Einbau im Gehäuse um seine Längsachse zu drehen, so daß sich für die Einbaulage des Gehäuses ein weiterer Freiheitsgrad ergibt.

Die Erfindung schafft außerdem eine Spritzgießform zur Herstellung eines Trägers mit angeformtem Ansatz für einen erfindungsgemäßen Trägheitssensor, die einen Einsatz aufweist, der die Form für den Ansatz bildet und der um eine zur Schwenkachse parallelen Achse, welche die Achse der kreiszylindrischen Fläche des Trägers bildet, bezüglich einer Form für den Träger verdrehbar ist, so daß mit ein und derselben Spritzgießform Träger mit angeformtem Ansatz hergestellt werden können, bei denen der Ansatz unter verschiedenen Winkeln an der kreiszylindrischen Fläche des Trägers angeformt ist.

Die Erfindung schafft schließlich eine Spritzgießform zur Herstellung eines Sensorhebels mit angeformter Steuerklinke für einen erfindungsgemäßen Trägheitssensor, die einen Einsatz aufweist, der die Form für die Steuerklinke bildet und der um eine zur Schwenkachse parallelen Achse, welche die Achse der kreiszylindrischen Fläche des Sensorhebels bildet, bezüglich einer Form für den Sensorhebel verdrehbar ist, so daß mit ein und derselben Spritzgießform Sensorhebel mit angeformter Steuerklinke hergestellt werden können, bei denen die Steuerklinke unter verschiedenen Winkeln an der kreiszylindrischen Fläche des Sensorhebels angeformt ist. Diese Träger bzw. Sensorhebel finden Verwendung in Trägheitssensoren für Gurtaufroller, die in verschiedenen Einbaulagen im Fahrzeug montiert werden können. Zur Herstellung eines Trägers bzw. Sensorhebels, bei dem der Ansatz bzw. die Steuerklinke unter einem bestimmten Winkel angeformt ist, muß lediglich der Einsatz bezüglich der Form für den Träger bzw. den Sensorhebel durch Verdrehen entsprechend eingestellt werden, ohne daß zur Herstellung dieses neuen Bauteiles ein neues Werkzeug erforderlich wäre. Zusätzlich ergibt sich eine beträchtliche Kosten- und Zeitersparnis durch den Wegfall der Umrüstarbeiten an der Spritzgießform.

Vorteilhafte Ausgestaltungen der Erfindung ergeben sich aus den Unteransprüchen.

Die Erfindung wird nachfolgend anhand verschiedener Ausführungsformen beschrieben, die in den beigefügten Zeichnungen dargestellt sind. In diesen zeigt:
Fig. 1a eine Ansicht eines Gurtaufrollers mit einer ersten Ausführungsform des erfindungsgemäßen Trägheitssensors;
Fig. 1b eine Ansicht des Gurtaufrollers aus Fig. 1a mit angeschnittenem Gehäuse;
Fig. 2 eine Ansicht eines Gurtaufrollers mit einem Trägheitssensor gemäß einer zweiten Ausführungsform der Erfindung;
Fig. 3 eine Ansicht eines Gurtaufrollers mit einem Trägheitssensor gemäß einer dritten Ausführungsform der Erfindung;
Fig. 4a der Gurtaufroller aus Fig. 1a in einem zweiten Zustand;
Fig. 4b eine Ansicht des Gurtaufrollers aus Fig. 4a mit angeschnittenem Gehäuse;
Fig. 5 der Gurtaufroller aus Fig. 3 in einem zweiten Zustand;
Fig. 6 der Gurtaufroller aus Fig. 2 in einem zweiten Zustand;
Fig. 7a eine Ansicht des Trägheitssensors aus Fig. 3;
Fig. 7b den Träger mit Ansatz des Trägheitssensors aus Fig. 7a;
Fig. 7c den Sensorhebel des Trägheitssensors aus Fig. 7a;
Fig. 8a eine Ansicht des Trägheitssensors aus Fig. 2;
Fig. 8b den Träger mit Ansatz des Trägheitssensors aus Fig. 8a;
Fig. 8c den Sensorhebel des Trägheitssensors aus Fig. 8a;
Fig. 9a eine Ansicht des Trägheitssensors aus Fig. 1a;
Fig. 9b eine teilweise geschnittene Ansicht des Trägheitssensors aus Fig. 9a;
Fig. 10 eine erste perspektivische Teilansicht des Gehäuses des Gurtaufrollers aus Fig. 1a;
Fig. 11 eine zweite perspektivische Teilansicht des Gehäuses des Gurtaufrollers aus Fig. 1a;
Fig. 12 ein Querschnitt durch einen Teil eines Gurtaufrollers mit einem Trägheitssensor gemäß einer vierten Ausführungsform der Erfindung;
Fig. 13 einen Querschnitt durch einen Teil eines Gurtaufrollergehäuses mit einem Trägheitssensor gemäß einer fünften Ausführungsform der Erfindung;
Fig. 14a eine erste perspektivische Ansicht des Trägheitssensors aus Fig. 13;
Fig. 14b eine zweite perspektivische Ansicht des Trägheitssensors aus Fig. 13;
Fig. 15 eine teilweise angeschnittene erste perspektivische Ansicht des Trägheitssensors aus Fig. 1a;
Fig. 16 ein Querschnitt durch den Trägheitssensor aus Fig. 15 in der Ebene XVI;
Fig. 17 eine vergrößerte Darstellung des Ausschnittes XVII von Fig. 16;
Fig. 18 eine teilweise angeschnittene zweite perspektivische Ansicht des Trägheitssensors aus Fig. 15;
Fig. 19 einen Längsschnitt durch den Trägheitssensor aus Fig. 18;
Fig. 20 eine vergrößerte Darstellung des Ausschnittes XX von Fig. 19;
Fig. 21 eine schematische Ansicht der unteren Werkzeughälfte einer erfindungsgemäßen Spritzgießform;
Fig. 22 ein vergrößerter Ausschnitt der Spritzgießform aus Fig. 21 und
Fig. 23 einen Querschnitt durch den Ausschnitt aus Fig. 22 entlang der Linie XXIII - XXIII in Fig. 22.

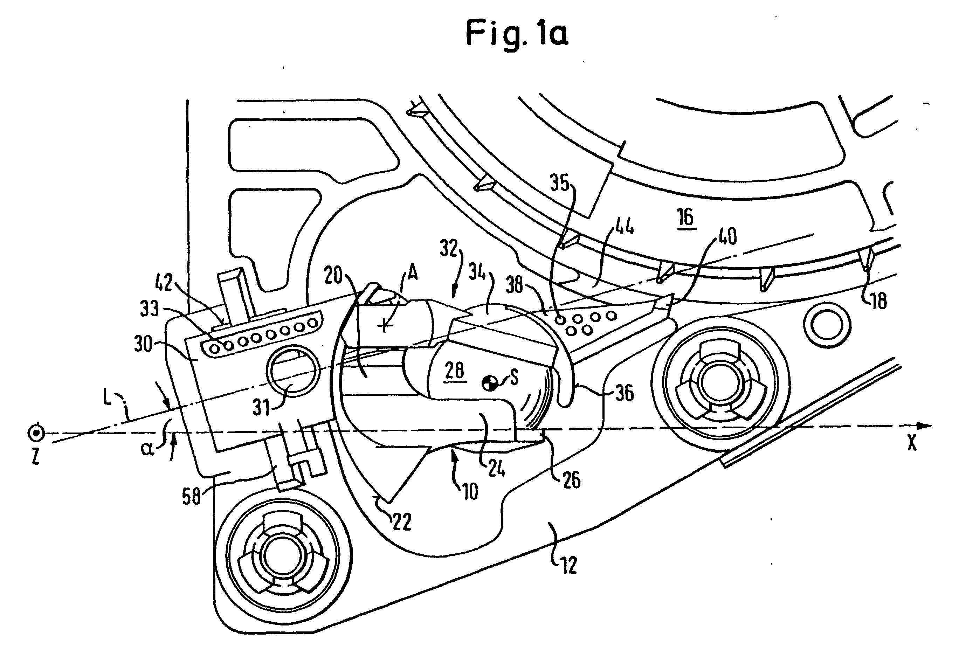

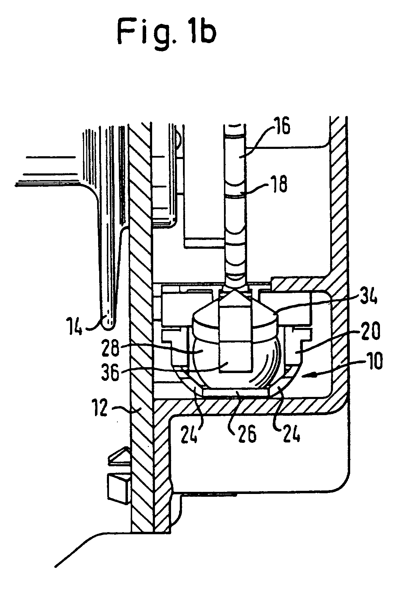

In den Fig. 1a und 1b ist ein Teil eines Gurtaufrollers zu sehen, der mit einem Trägheitssensor 10 ausgestattet ist. Der Gurtaufroller besteht aus einem Gehäuse 12, einer Gurtspule 14 und einem Sperrmechanismus mit einer Steuerscheibe 16, wobei das Gehäuse 12 in Fig. 1a geöffnet und in Fig 1b geschnitten dargestellt ist, damit der Trägheitssensor 10, der üblicherweise zum Schutz vor Verschmutzung fast vollständig gekapselt ist, sichtbar ist. Der Sperrmechanismus mit der Steuerscheibe 16 kann in bekannter Weise fahrzeugsensitiv und gurtsensitiv ausgelöst werden und ist daher hier nicht weiter beschrieben. Zur fahrzeugsensitiven Auslösung des Sperrmechanismus muß die Steuerscheibe 16, die mit Zähnen 18 versehen ist, gegenüber dem Gehäuse blockiert werden, wozu in der vorliegenden Ausführungsform der Trägheitssensor 10 dient.

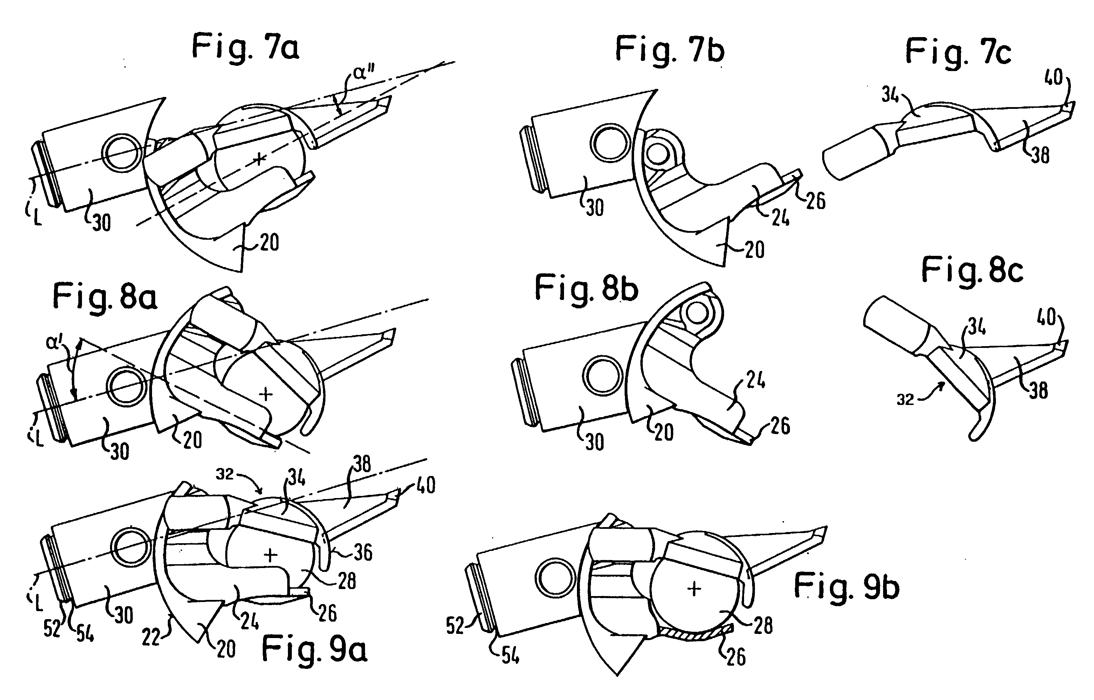

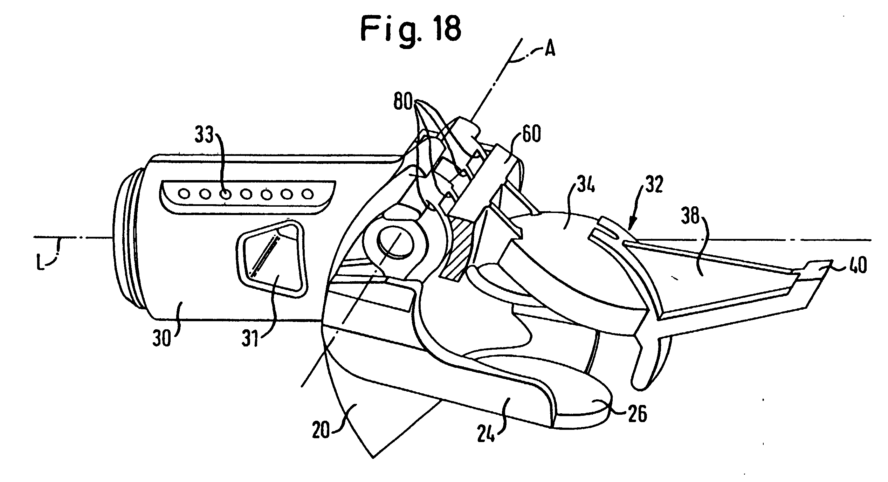

Der Trägheitssensor 10 (siehe auch Fig. 9a) besteht aus einem Träger 20, der mittels zweier Arme 24 eine Halterung 26 für einen Massekörper in Form einer Kugel 28 trägt. Der Träger 20 weist eine kreiszylindrische Fläche 22 auf, die einen Kreisbogen von etwas mehr als 90° um den Mittelpunkt der Kugel 28 beschreibt. Die Halterung 26 besteht aus einem Teller, dessen Innenseite vorzugsweise kegelförmig vertieft ist (Fig. 9b). Damit liegt die Kugel lediglich an einer Kreislinie am Teller auf, so daß sie leicht beweglich ist. An der Zylinderfläche 22 ist ein Ansatz 30 mit kreisförmigem Querschnitt angebracht, dessen Längsachse L (in Fig. 1a durch die strichpunktierte Linie verdeutlicht) mit der vom Rand der tellerförmigen Halterung 26 aufgespannten X/Z-Ebene (in Fig. 1a als Linie dargestellt) den Winkel α bildet. (In den Figuren 7a, 8a und 9 sind Ausführungsformen dargestellt, bei denen der Ansatz 30 unter anderen Winkeln α', α" angebracht ist.) Die Bedeutung dieses Winkels wird später erläutert. Durch den Ansatz 30 hindurch verläuft quer zu seiner Längsachse L eine Bohrung 31, die der leichteren Handhabung des Trägheitssensor 10, beispielsweise in Montageautomaten, dient. Der Automat kann in die Bohrung 31 eingreifen und so den Trägheitssensor 10 in einer definierten Position festhalten. Der Querschnitt der Bohrung 31 ist kreisrund, kann aber auch von anderer Gestalt sein, wie in der Fig. 18 dargestellt. In einer Ausnehmung am Ansatz 30 sind eine bestimmte Anzahl Kodiermarken 33 angebracht, in denen der Winkel α dieses Trägheitssensors 10 kodiert ist. Die Ausgestaltung der Kodiermarken wird weiter unten bei der Beschreibung einer Spritzgießform genauer erläutert. In gleicher Weise ist der Sensorhebel 32, in dieser Ausführungsform vorzugsweise an der Steuerklinke 38, mit Kodiermarken 35 versehen, so daß ein Sensorhebel 32 mit einer bestimmten Winkelstellung der Steuerklinke 38 dem zugehörigen Träger 20 zugeordnet werden kann.

Am Träger 20 ist schwenkbar um eine zur X/Z-Ebene (in den Zeichnungen durch ein Koordinatensystem angedeutet) parallelen Achse A ein Sensorhebel 32 gelagert. Der Sensorhebel 32 stützt sich mit einem Abschnitt, der als Kugelkappe 34 ausgebildet ist, auf der Kugel 28 ab. Ausgehend vom Mittelpunkt der Kugelkappe 34 ist radial eine Zylinderfläche 36 ausgebildet, die sich bis über den Rand der Kugelkappe hinweg erstreckt. An der Zylinderfläche 36 ist eine Steuerklinke 38 angebracht, deren freies Ende einen Kontaktabschnitt 40 bildet. Die Achse der Zylinderfläche 36 verläuft parallel zur Achse A durch den Schwerpunkt der Kugel. Der Trägheitssensor 10 ist vom Gehäuse 12 fast vollständig umschlossen. Lediglich eine Öffnung 44 gestattet der Steuerklinke 38 den Durchgriff in Richtung der Steuerscheibe 16.

Der Gurtaufroller ist im Fahrzeug so montiert, daß die X/Z-Ebene des Trägheitssensor 10 in der Horizontalen liegt. Im Stand oder bei Fahrt des Fahrzeugs mit gleichmäßiger Geschwindigkeit wirkt auf die Kugel 28 nur die Schwerkraft in Richtung des Normalenvektors der X/Z-Ebene. Die Kugel 28 liegt dann in ihrer Ruhelage im tiefsten Punkt der tellerförmigen Halterung 26. Wird der Gurtaufroller in der X/Z-Ebene beschleunigt, beispielsweise beim Bremsen, dann erfährt die Kugel 28 aufgrund ihrer Massenträgheit eine Kraft, durch welche sie aus ihrer Ruhelage bewegt werden kann. Dabei hebt die Kugel 28 den kugelkappenartigen Abschnitt 34 des Sensorhebels 32 an, wodurch der Sensorhebel 32 in seiner Lagerung verschwenkt wird. Dabei gelangt die Steuerklinke 38 in die Nähe der Steuerscheibe 16, so daß bei einer Drehung der Steuerscheibe 16 der Kontaktabschnitt 40 mit einem der Zähne 18 in Eingriff kommt und damit die Steuerscheibe blockiert wird.

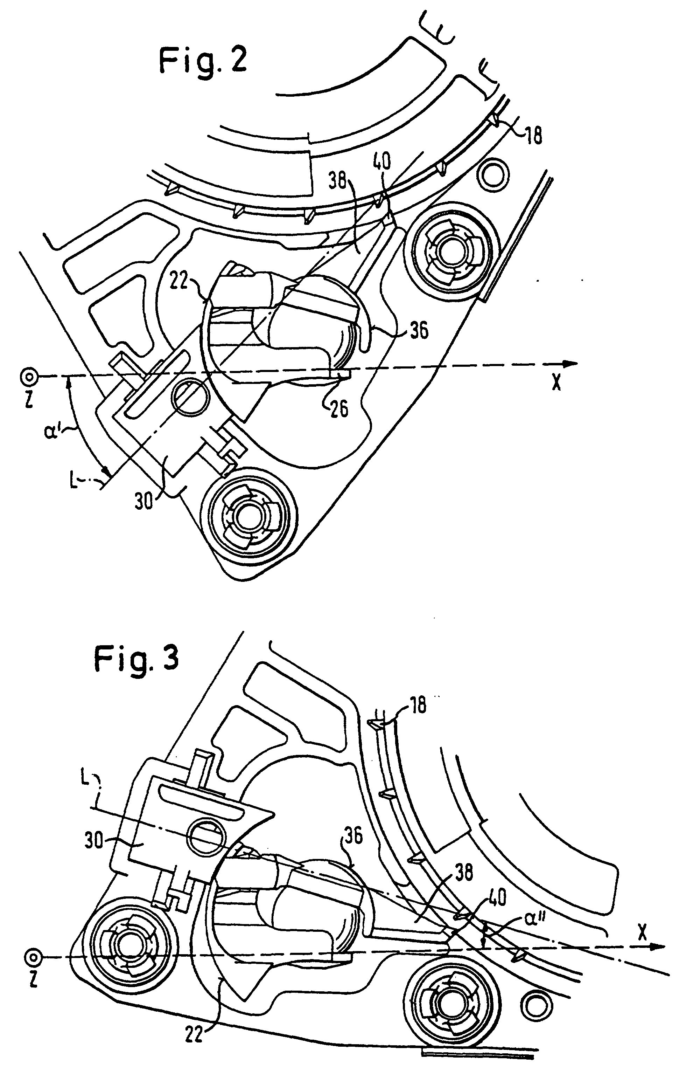

Wesentlich für die Funktion des Trägheitssensors 10 ist, daß die X/Z-Ebene im eingebauten Zustand des Gurtaufrollers immer annähernd in der Horizontalen liegt. Soll der Gurtaufroller in einer anderen Lage eingebaut werden, so ist dafür ein Trägheitssensor zu verwenden, bei dem der Ansatz 30 unter einem anderen Winkel α' in bezug auf die X/Z-Ebene an der Zylinderfläche 22 angebracht ist. In den Fig. 2, 3 und 7a bis 8c sind Ausführungsformen gezeigt, bei denen ein sehr großer Winkel α' (Fig. 2, 8a - c) und ein negativer Winkel α" (Fig. 3, 7a - c) verwirklicht sind. Der mögliche Winkelbereich hängt vom Winkel des Kreisbogens ab, den die Zylinderfläche 22 überstreicht. Dasselbe gilt für den Winkel, unter dem die Steuerklinke 38 an der Zylinderfläche 36 des Sensorhebels 32 angebracht ist. Dieser ist entsprechend so zu wählen, daß der Kontaktabschnitt 40 beim Eingriff in die Zähne 18 wieder auf der Achse L liegt. Die Idee der Erfindung ist leicht zu verstehen, wenn Ansatz 30 und Steuerklinke 38 als eine erste Einheit betrachtet werden, die in den verschiedene Ausführungsformen für die unterschiedlichen Einbaulagen ihre Position zueinander beibehalten, so daß der Kontaktabschnitt 40 bei aktiviertem Sensor 10 immer auf der Achse L des Ansatzes 30 liegt. Der Träger 20 mit der Halterung 26 und der Sensorhebel 32 können nun als zweite Einheit betrachtet werden, die für eine ordnungsgemäße Funktion des Sensors 10 immer so orientiert sein muß, daß ihre X/Z-Ebene in der Horizontalen liegt. Da für verschiedene Einbaulagen des Gurtaufrollers die Achse L der ersten Einheit verschiedene Winkel a zur Horizontalen einnimmt, werden für diese verschiedenen Einbaulagen Sensoren benötigt, bei denen die X/Z-Ebene der zweiten Einheit gegenüber der Achse L der ersten Einheit um eben diesen Winkel α verdreht ist.

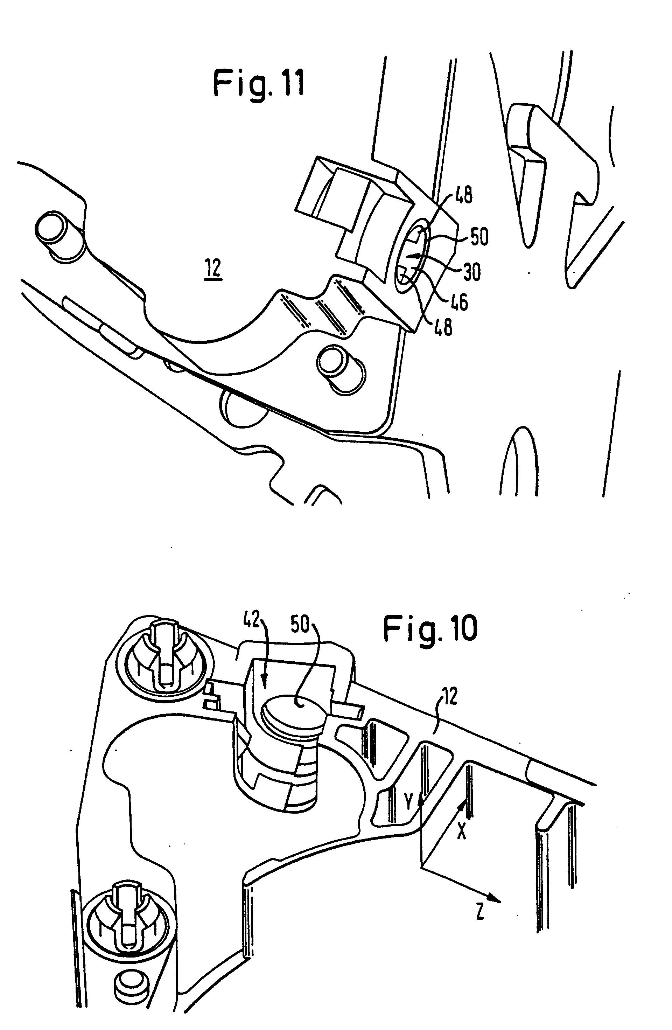

In Fig. 10 ist ein Teil eines geöffneten Gehäuses 12 ohne Trägheitssensor 10 dargestellt. Im Bereich der Ausnehmung 42 ist eine Öffnung 50 zu sehen, die das Ende des Ansatzes 30 von außen zugänglich macht. In Fig. 11 ist das Gehäuse 12 von außen zu sehen. In dieser Darstellung ist das Gehäuse geschlossen, und es ist ein Trägheitssensor montiert, von dem lediglich das Ende des Ansatzes 30 zu sehen ist. Der Durchmesser der Öffnung 50 ist kleiner als der Durchmesser des Ansatzes 30. Das Ende des Ansatzes 30 ist durch einen Fortsatz 52 (siehe auch Fig. 7a - 9b) gebildet, der einen etwas kleineren Durchmesser als die Öffnung hat und somit durch die Öffnung 50 ragen kann. Mit diesem Fortsatz 52 ist der Ansatz 30 zusätzlich in der Öffnung 50 geführt. Der Fortsatz 52 ist durch einen Bund 54 vom Ansatz 30 abgesetzt, in den eine Dichtung eingesetzt sein kann, um die Öffnung 50 abzudichten.

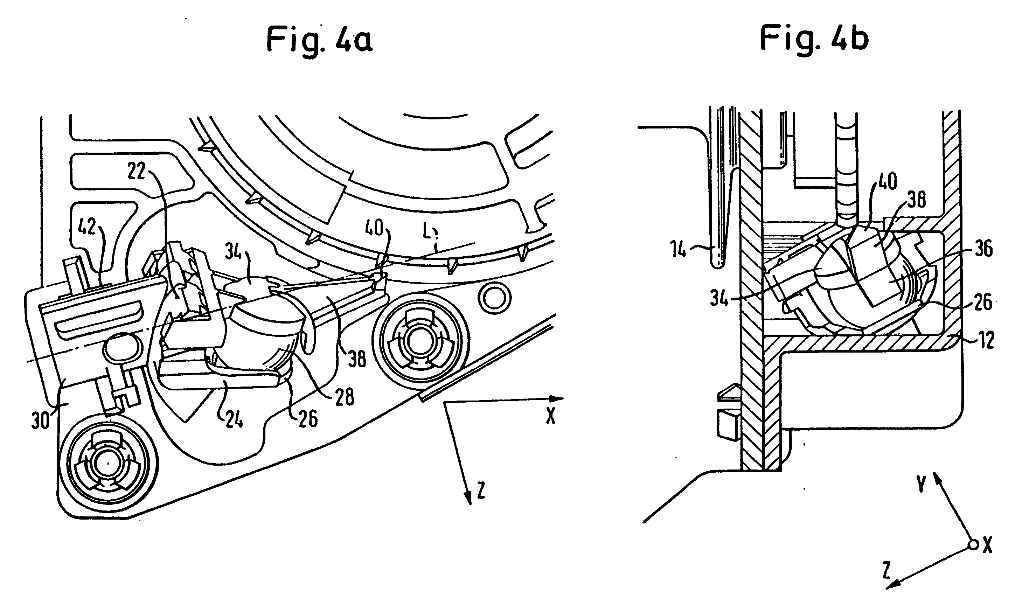

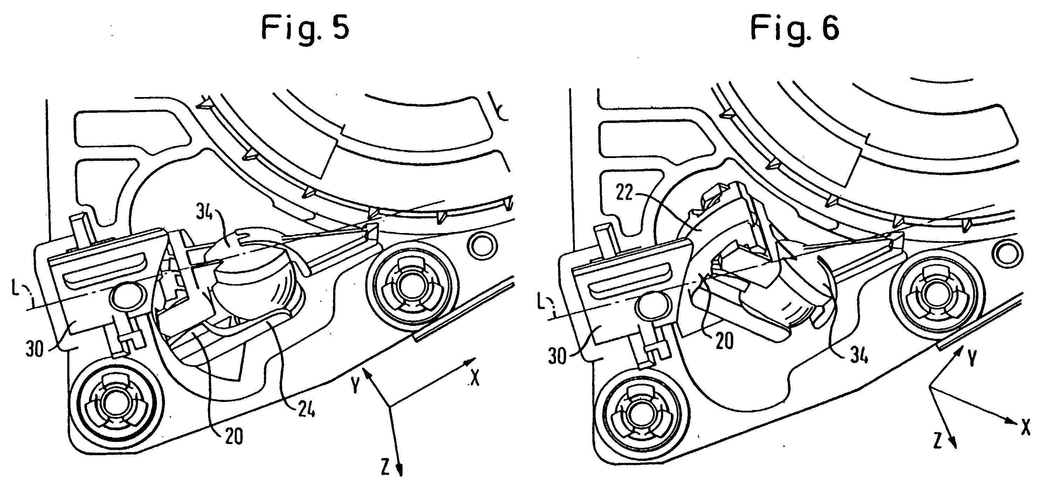

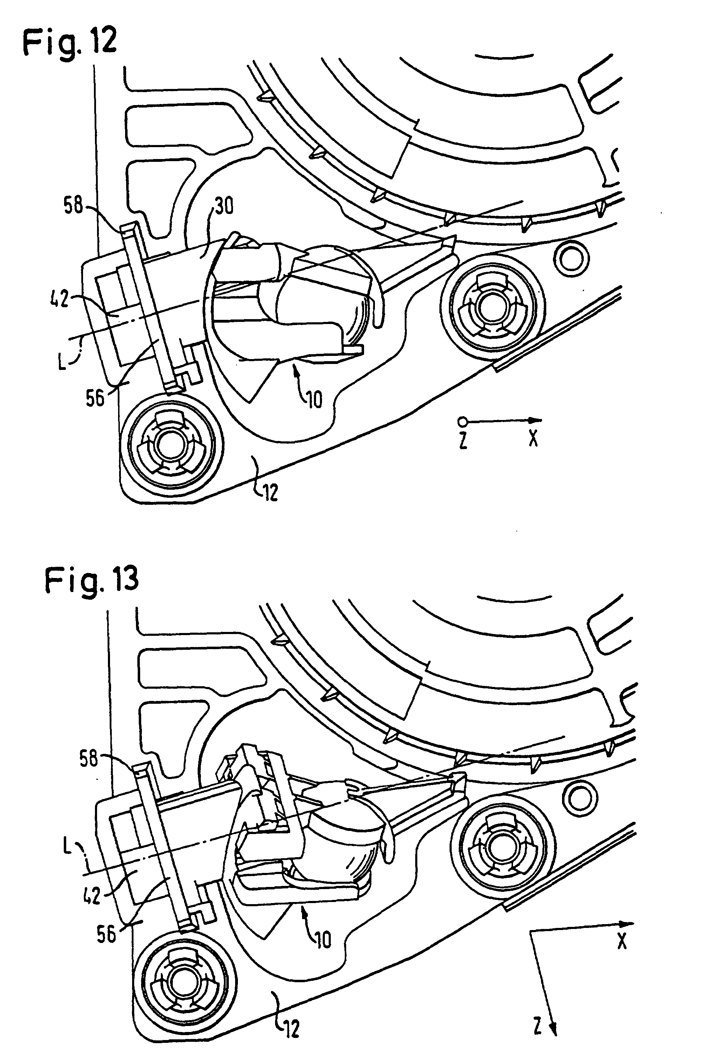

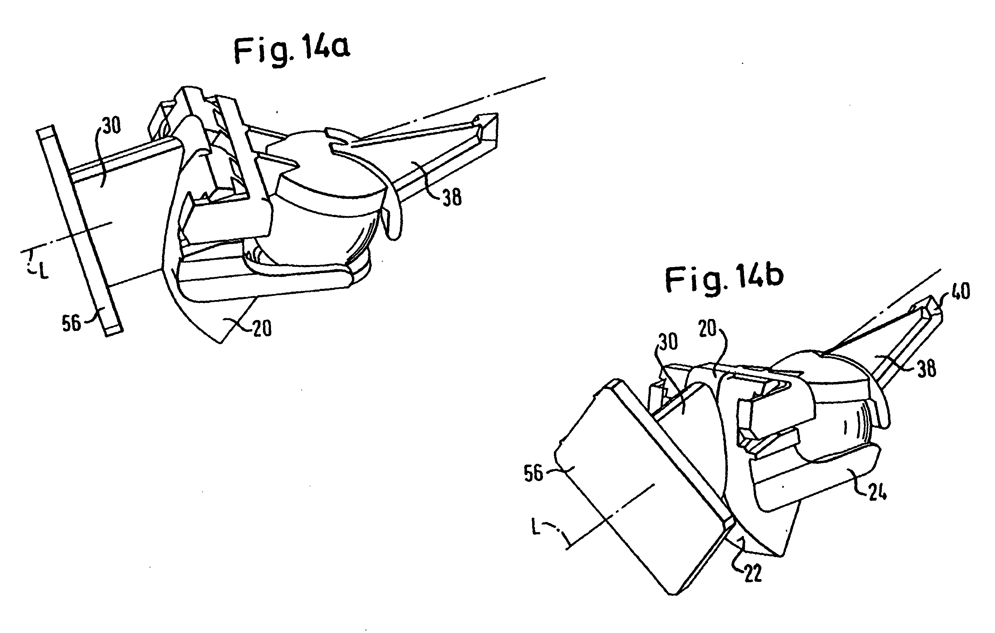

Wie in den Fig. 4a, 4b, 5 und 6 zu sehen ist, ist der Ansatz 30 in einer Ausnehmung 42 im Gehäuse 12 um die Achse L drehbar gelagert. Damit kann die Lage der X/Z-Ebene korrigiert werden, wenn der Gurtaufroller so eingebaut werden soll, daß die Ebene der Steuerscheibe 16 nicht mehr in der Vertikalen liegt. Diese Einstellung kann vorteilhafterweise direkt nach der Montage des Trägheitssensors 10 im Gehäuse 12 vorgenommen werden, wenn bekannt ist, in welcher Einbaulage der Gurtaufroller montiert wird. Anschließend wird die Lage des Ansatzes 30 in der Ausnehmung 42 im Gehäuse beispielsweise durch Laserschweißen oder Verkleben gesichert, so daß sich beim Transport oder beim späteren Betrieb die Lage des Trägheitssensors 10 nicht mehr verändern kann. Zur Einstellung ist am freien Ende des Ansatzes 30 eine kreisförmige Ausnehmung 46 vorgesehen, (Fig. 11) in welche zwei gegenüberliegende Stege 48 radial hineinragen. Diese Ausnehmung 46 ist durch die Öffnung 50 im Gehäuse 12 (Fig. 11) von außen zugänglich, so daß der Trägheitssensor 10 nach dem Zusammenbau des Gurtaufrollers von außen um die Längsachse L gedreht werden kann. Eine einfachere Montage des Trägheitssensors 10 im Gehäuse 12 ergibt sich, wenn auf die Einstellmöglichkeit bezüglich der Achse L verzichtet wird. Das freie Ende des Ansatzes 30 kann dann mit einer rechtwinkligen Platte 56 (Figuren 12 - 14b) versehen sein. Die Platte 56 wird bei der Montage in eine Ausnehmung 58 im Gehäuse 12 eingeschoben, womit der Trägheitssensor drehfest gelagert ist. Die Orientierung bezüglich der Längsachse L ist damit bereits bei der Herstellung des Trägers 20 festgelegt, indem die Platte 56 mit der gewünschten Orientierung um die Achse L angebracht ist.

Vorteilhafterweise kann das Gehäuse 12 so ausgelegt sein, daß es Trägheitssensoren 10 beider Ausführungsformen aufnehmen kann, also sowohl mit zylindrischem Ansatzende als auch mit rechteckiger Platte 56. Im Gehäuse 12 sind dann Ausnehmungen 42, 58 für beide Ausführungen vorhanden, wie es auch in den Figuren dargestellt ist.

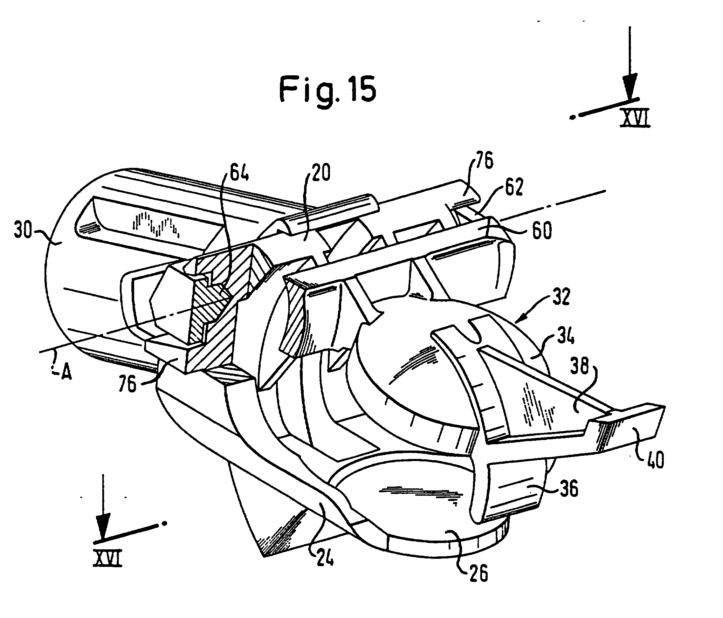

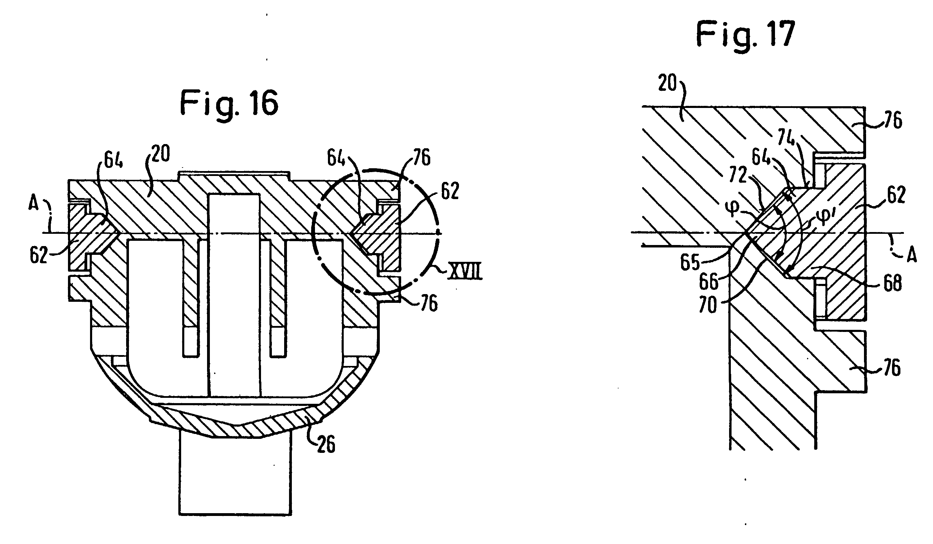

In den Fig. 15 bis 17 ist die Lagerung des Sensorhebels 32 am Träger 20 genauer dargestellt. An der Kugelkappe 34 des Sensorhebels 32 ist gegenüber der Zylinderfläche 36 ein Steg 60 angebracht, an dessen Enden sich zwei parallele Arme 62 befinden, die den Träger 20 umgreifen. Auf den einander zugewandten Seiten der Arme 62 ist jeweils ein Zapfen 64 vorgesehen, der an seiner Spitze 65 einen kegelig geformten Abschnitt 66 und daran anschließend einen zylindrischen Abschnitt 68 aufweist. Diese Zapfen greifen in Bohrungen 70 am Träger 20 ein, die am Grund einen kegeligen Abschnitt 72 und daran anschließend einen zylindrischen Abschnitt 74 aufweisen. Wie in dem Ausschnitt in Fig. 17 zu sehen ist, ist der Spitzenwinkel ϕ des kegeligen Abschnittes 68 der Zapfen 64 kleiner als der Spitzenwinkel ϕ' des kegeligen Abschnittes 72 der Bohrungen 70, so daß der Zapfen im wesentlichen nur an der Spitze 65 gelagert ist. Damit die Zapfen 64 auch bei geringfügigen Fertigungstoleranzen der Spitzen 65 noch in der Achse der Bohrung 70 bleiben, werden sie zusätzlich mit ihren zylindrischen Abschnitten 68 von den zylindrischen Abschnitten 74 der Bohrungen geführt. Beiderseits der Arme 62 sind am Träger 20 Anschläge 76 vorgesehen, welche den maximalen Schwenkbereich des Sensorhebels 32 begrenzen, damit die Kugel 28 nicht aus dem Trägheitssensor 10 herausfallen kann.

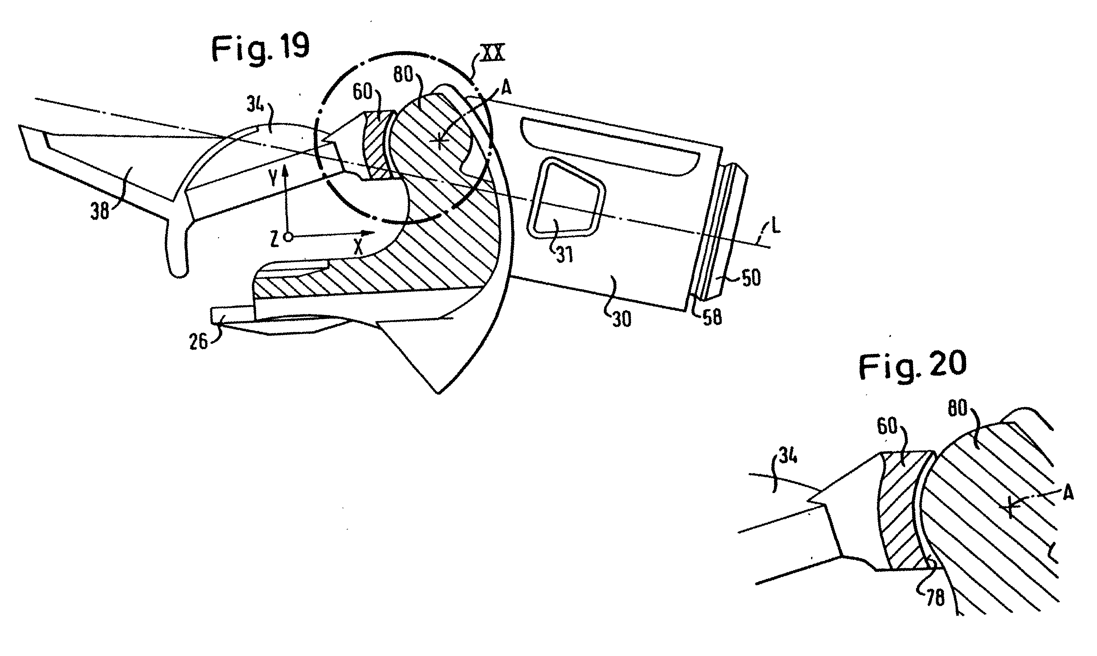

Wie in den Fig. 18 bis 20 genauer zu sehen ist, weist der Sensorhebel am Steg 60 eine zylindrische Abstützfläche 78 auf, deren Achse mit der Schwenkachse A des Sensorhebels übereinstimmt. Gegenüberliegend zur Abstützfläche 78 ist der Träger 20 mit Rippen 80 versehen, die eine zur Achse A zylindrische Außenkontur aufweisen, die zur Abstützfläche 78 geringfügig beabstandet ist. Wenn der Kontaktabschnitt 40 der Steuerklinke 38 mit den Zähnen 18 der Steuerscheibe 16 in Eingriff kommt, erfährt der Sensorhebel 32 eine Last im wesentlichen in Richtung der Längsachse L des Trägheitssensors 10. Damit diese Last nicht durch die Spitzenlagerung der Zapfen 64 (Fig. 15 - 17) übertragen werden muß, ist der Steg 60 elastisch. Daher verbiegt sich der Steg 60 unter der Last quer zu seiner Längsachse, bis die Abstützfläche 78 an den Rippen 80 anliegt. Dann kann der Sensorhebel 32 die Belastung über die Abstützfläche 78 an die Rippen 80 des Trägers 20 und damit letztendlich an das Gehäuse 12 weitergeben.

Selbstverständlich ist die Erfindung nicht auf die gezeigten Ausführungsformen beschränkt. Es sind durchaus Ausbildungen denkbar, bei denen anstelle der Kugel ein anders geformter Massekörper verwendet wird, der auch anders gelagert sein kann. Wesentlich ist, daß die Achsen der Zylinderflächen von Träger und Sensorhebel identisch sind und durch den Schwerpunkt des Massekörpers gehen.

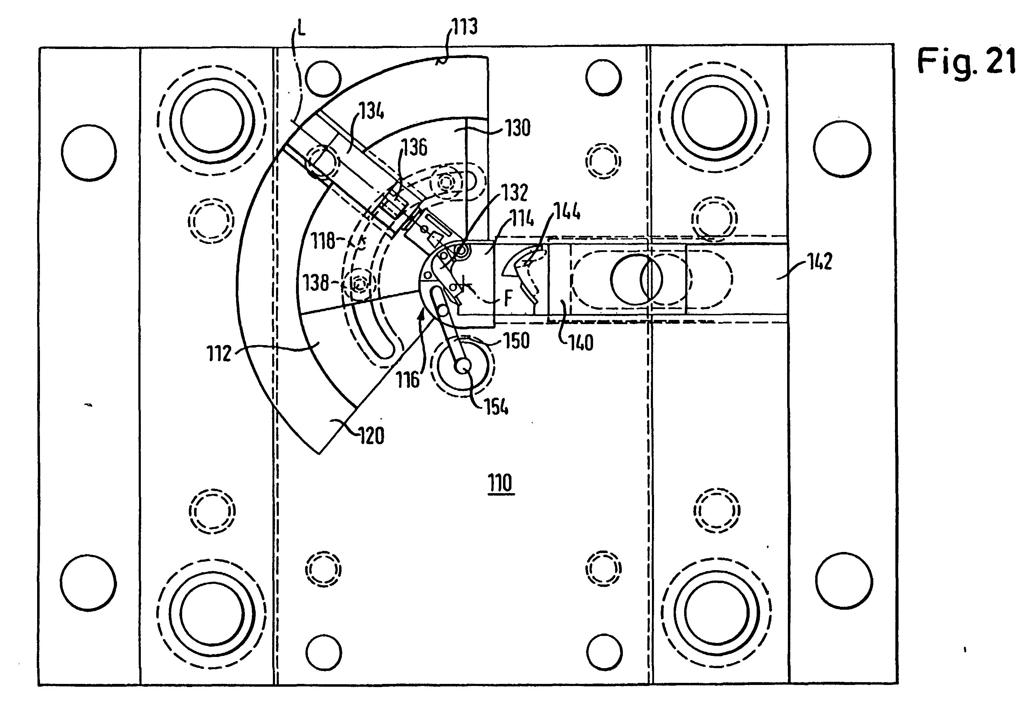

Die Fig. 21 zeigt schematisch (nur zur Hälfte dargestellt) eine Ausführungsform für eine Spritzgießform zur Herstellung eines Trägers für einen erfindungsgemäßen Trägheitssensor mit angeformtem Ansatz. Die Formkonturen für die einzelnen Teile des Trägers sind mit den entsprechenden, in der vorhergehenden Beschreibung verwendeten Bezugszeichen, ergänzt um einen Strich', versehen. Dargestellt ist eine Ansicht auf die Teilungsebene einer unteren Formhälfte 110. Diese untere Formhälfte 110 besteht im wesentlichen aus einer Platte, in der eine Ausnehmung 112 vorgesehen ist. Die Ausnehmung 112 hat in der Ansicht die Form eines Kreisringsegmentes, das sich im vorliegenden Fall über einen Winkel von etwa 135° erstreckt, mit einer Achse F, die sich senkrecht zur Formteilungsebene verläuft. Die der Achse F fern gelegene Kontur der Ausnehmung 112 bildet eine Zylinderfläche 113.

Zur Achse F hin wird die Ausnehmung 112 durch einen ersten Einsatz, den Trägerformeinsatz 114, begrenzt, der in der unteren Werkzeughälfte 110 eingelassen ist und den unteren Teil einer Formkontur 20' für den Träger bildet. Der Trägerformeinsatz 114 ist zur Ausnehmung 112 hin durch eine zylindrische Formteilungsfläche 116 begrenzt, deren Achse mit der Achse F zusammenfällt.

Am Grund der Ausnehmung 112 ist auf einem Kreisbogen um die Achse F ein Längsschlitz 118 ausgebildet, der sich durch die untere Formhälfte 110 der Spritzgießform hindurch erstreckt. Der Grund der Ausnehmung 112 ist abgestuft, wobei die an die äußere Kreisbogenkontur 113 angrenzende Stufe einen ringsegmentförmigen Absatz 120 bildet. Zwischen dem Trägerformeinsatz 114 und dem Absatz 120 ist ein Ansatzformeinsatz 130 verschiebbar geführt. Dieser Ansatzformeinsatz 130 besteht im wesentlichen aus einem Kreisringsegment, dessen Achse wiederum mit der Achse F zusammenfällt. An der in der Formteilungsebene der Spritzgießform liegenden Oberfläche des Einsatzes 130 ist die Formkontur 30' für den Ansatz ausgebildet, dessen Längsachse L senkrecht zur Achse F in der Formteilungsebene liegt.

In der Achse L, an das Ende der Formkontur 30' anschließend, ist in dem Einsatz 130 eine Ausnehmung vorgesehen, in welcher ein erster Verdränger 134 in Richtung der Achse L verschiebbar geführt ist. Der Verdränger 134 weist an seiner der Formkontur 30' zugewandten Stirnfläche eine Formkontur 136 auf, mit welcher die Ausnehmung 46' im Ansatz des zu spritzenden Trägers mitsamt den Stegen 48' geformt werden kann. An der Unterseite des Ansatzformeinsatzes 130, mit welcher er am Grund der Ausnehmung 112 anliegt, sind zwei Bolzen 138 ausgebildet, die durch den Längsschlitz 118 ragen und mit denen der Ansatzformeinsatz 130 an der unteren Formhälfte 110 befestigt werden kann.

Ein zweiter Verdränger 140 ist in einem Kanal 142 verschiebbar geführt, der sich vom Trägerformeinsatz 114 bis zum Rand der Formteilungsfläche 116 erstreckt. An der zum Trägerformeinsatz 114 gewandten Stirnseite des Verdrängers 140 ist eine Formkontur 144 für die Innenseite des Trägers 20' ausgebildet. Zufuhrkanäle 150, 152 verbinden die Form für den Träger mit der Zufuhrbohrung 154, über welche die Spritzgießform mit dem Spritzgußmaterial versorgt wird. Des weiteren sind in der Formhälfte 110 mehrere Befestigungsund Zentrierbohrungen vorgesehen, deren Funktion dem Fachmann bekannt ist und daher hier nicht weiter beschrieben werden muß.

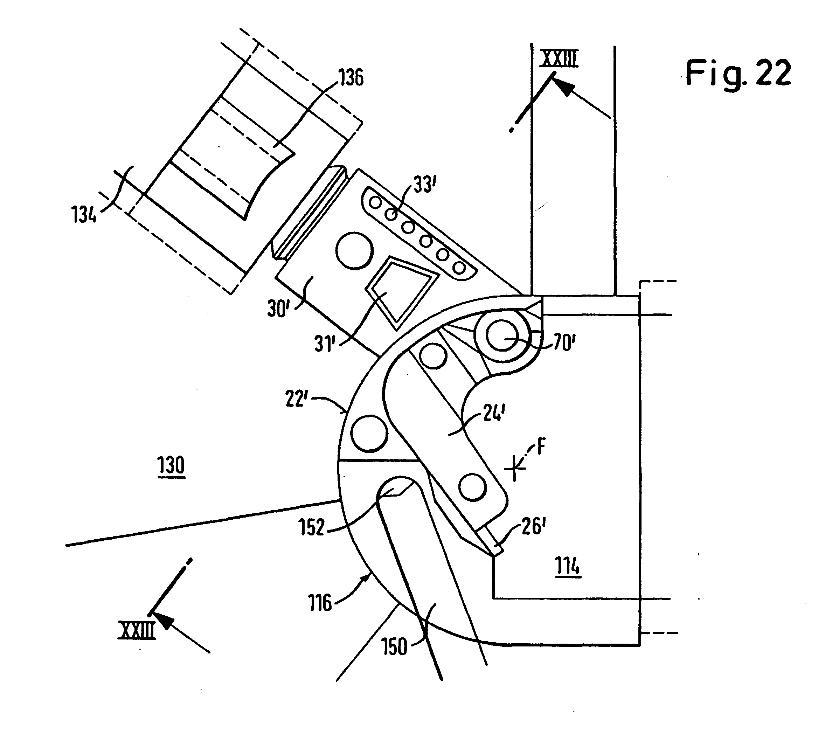

In Fig. 22 sind der Ansatzformeinsatz 130 und der Trägerformeinsatz 114 vergrößert dargestellt. Hier ist ersichtlich, daß ein Teil der Formteilungsfläche 116 die Formkontur 22' für die Zylinderfläche des Trägers bildet. Auch die Abschnitte der Formkontur 20' für die tellerförmige Halterung 26' und die Bohrungen 70', die zur Aufnahme der Zapfen des Sensorhebels dienen, sind deutlich zu sehen.

Mit dieser Spritzgießform können Träger für einen Trägheitssensor mit angeformtem Ansatz hergestellt werden, bei denen der Ansatz unter verschiedenen Winkeln an der zylindrischen Fläche des Trägers angeformt ist. Dazu muß lediglich der Ansatzformeinsatz 130 durch Verschieben in der Ausnehmung 112 auf den gewünschten Winkel eingestellt werden. Mit Hilfe der Bolzen 136 kann der Einsatz 130 in der Spritzgießform 110 fixiert werden. Ein Austausch der Einsätze 114, 130 ist dazu nicht erforderlich. Selbstverständlich kann jedoch auch der Einsatz 130 leicht ausgetauscht werden, etwa zur Herstellung eines Trägers mit einem Ansatz mit angeformter Platte 56, wie vorher beschrieben. Auch der Trägerformeinsatz 114 kann in vorteilhafter Weise leicht durch einen anderen Einsatz ausgetauscht werden, beispielsweise durch einen Einsatz für einen Träger, der für eine andere Art von Massenkörper ausgebildet ist.

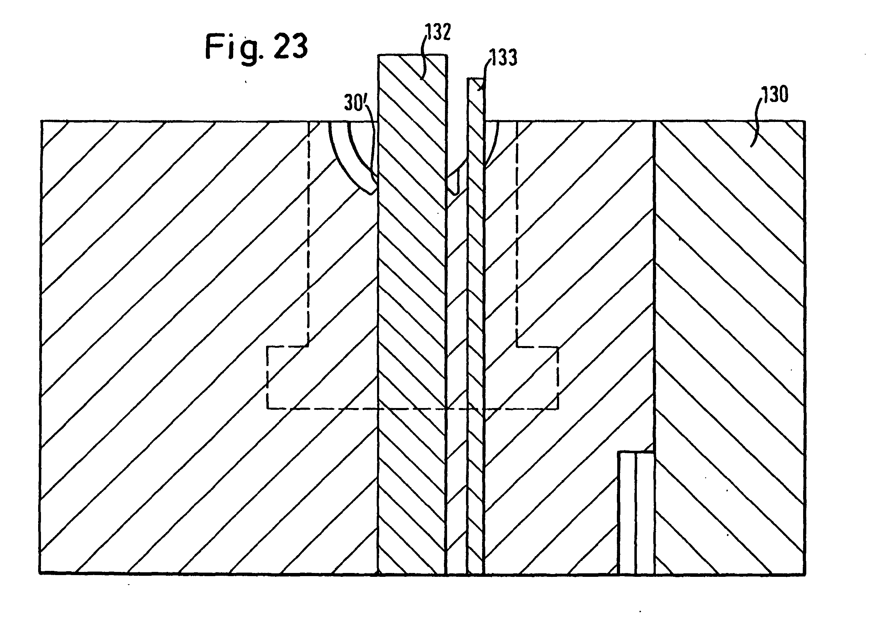

In Fig. 23 ist der Ansatzformeinsatz 130 in einem Querschnitt dargestellt. Der Schnitt verläuft senkrecht zu der Linie XXIII - XXIII in Fig. 22. In der Darstellung ist die Formkontur 30' für eine Hälfte des zylindrischen Ansatzes erkennbar. Ein Einsatzstift 132 ruft im Ansatz die Handhabungsöffnung 31' (Fig. 22) hervor. Daneben sind weitere Einsatzstifte 133 vorgesehen. Mit diesen Stiften wird im fertigen Träger der Winkel zwischen der Achse des Ansatzes und der X/Z-Ebene kodiert. Je nach eingestelltem Winkel zwischen dem Ansatzformeinsatz 130 und dem Trägerformeinsatz 114 wird eine zugeordnete Zahl an Einsatzstiften an vorbestimmter Position eingesetzt. Der Ansatz des fertigen Trägers enthält dann eine entsprechende Anzahl von Kodiermarken in Gestalt dieser Kodierlöcher (siehe auch Fig. 22), anhand derer leicht festgestellt werden kann, für welche Einbaulage dieser Sensor geeignet ist. Der Sensorhebel ist zweckmäßigerweise mit derselben Anordnung von Kodiermarken ausgestattet, so daß er dem passenden Träger zuzuordnen ist.

Aus der vorangegangenen Beschreibung erschließt sich für den Fachmann sofort, daß eine derartiges Spritzgießform in analoger Weise auch zur Herstellung eines Sensorhebels mit angeformter Steuerklinke für einen erfindungsgemäßen Trägheitssensor bereitgestellt werden kann. Mit Hilfe der Erfindung können also in erheblichem Umfang Kosten und Rüstzeiten bei der Herstellung von Trägheitssensoren eingespart werden.

## Patentansprüche

1. Trägheitssensor (10) für die fahrzeugsensitive Auslösung eines Sperrmechanismus an einem Gurtaufroller, mit einem Massekörper (28), der von einem Träger (20) gehalten wird, mit einem auf dem Massekörper aufliegenden, an dem Träger um eine Achse (A) schwenkbar gelagerten Sensorhebel (32), an dem eine Steuerklinke (38) angebracht ist, deren freies Ende einen Kontaktabschnitt (40) bildet, der mit einer Steuerscheibe (16) des Gurtaufrollers zusammenwirken kann, und mit einem am Träger ausgebildeten Ansatz (30), mit welchem der Träger am Gurtaufroller befestigt werden kann, wobei der Träger (20) mit einer kreiszylindrischen Fläche (22) versehen ist, deren Achse parallel zur Schwenkachse (A) verläuft, **dadurch gekennzeichnet,**
**daß** der Ansatz (30) an die kreiszylindrische Fläche (22) angeformt ist und die Achse der kreiszylindrischen Fläche (22) durch den Schwerpunkt des Massekörpers (28) verläuft.

2. Trägheitssensor nach Anspruch 1, **dadurch gekennzeichnet, daß** der Sensorhebel (32) mit einer kreiszylindrischen Fläche (36) versehen ist, deren Achse parallel zur Schwenkachse (A) durch den Schwerpunkt des Massekörpers (28) verläuft und an welcher die Steuerklinke (38) angebracht ist.

3. Trägheitssensor nach Anspruch 1 oder 2, **dadurch gekennzeichnet, daß** der Ansatz (30) eine Längsachse (L) definiert, welche senkrecht zur Schwenkachse (A) steht und durch den Kontaktabschnitt (40) der Steuerklinke (38) geht, wenn sich der Sensor (10) im auslösenden Zustand befindet, so daß der Träger (20) mittels des Ansatzes unter verschiedenen Verdrehwinkeln bezüglich der Längsachse befestigt werden kann.

4. Trägheitssensor nach einem der vorhergehenden Ansprüche, **dadurch gekennzeichnet, daß** der Sensorhebel (32) am Träger (20) mittels zweier Zapfen (64) schwenkbar gelagert ist, die an ihrer Spitze (65) einen kegelig geformten Abschnitt (66) und daran anschließend einen kreiszylindrischen Abschnitt (68) aufweisen und die jeweils in Bohrungen (70) eingreifen, die am Grund einen kegeligen Abschnitt (72) und daran anschließend einen kreiszylindrischen Abschnitt (74) aufweisen.

5. Trägheitssensor nach einem der vorhergehenden Ansprüche, **dadurch gekennzeichnet, daß** der Sensorhebel (32) eine zur Achse (A) kreiszylindrische Abstützfläche (78) aufweist, daß am Träger (20) Rippen (80) vorgesehen sind, die eine zur Achse (A) zylindrische Außenkontur aufweisen und daß die Außenkontur der Rippen und die Abstützfläche (78) geringfügig beabstandet sind.

6. Trägheitssensor nach einem der vorhergehenden Ansprüche, **dadurch gekennzeichnet, daß** an dem Trägheitssensor (10) Kodiermarken (33) vorgesehen sind, an denen erkennbar ist, in welcher Position der Ansatz (30) am Träger (20) angebracht ist.

7. Trägheitssensor nach einem der Ansprüche 2 bis 6, **dadurch gekennzeichnet, daß** an dem Trägheitssensor (10) Kodiermarken (35) vorgesehen sind, an denen erkennbar ist, in welcher Position die Steuerklinke (38) am Sensorhebel (32) angebracht ist.

8. Gurtaufroller mit einem Gehäuse und einem Trägheitssensor nach einem der Ansprüche 1 bis 5, **dadurch gekennzeichnet, daß** der Ansatz (30) an seinem freien Ende mit einer Platte (50) versehen ist und daß in dem Gehäuse (12) eine Ausnehmung (58) vorgesehen ist, in welcher die Platte drehfest gelagert ist.

9. Gurtaufroller mit einem Gehäuse und einem Trägheitssensor nach einem der Ansprüche 1 bis 5, **dadurch gekennzeichnet, daß** der Ansatz (30) bezüglich seiner Längsachse (L) zylindrisch ist und daß in dem Gehäuse (12) eine Ausnehmung (42) vorgesehen ist, in welcher der Ansatz des Sensors (10) um seine Längsachse drehbar gelagert ist.

10. Gurtaufroller nach Anspruch 9, **dadurch gekennzeichnet, daß** ein Befestigungsmittel vorgesehen ist, mit welchem eine Verdrehposition des Ansatzes (30) im Gehäuse (12) fixiert ist.

11. Spritzgießform zur Herstellung eines Trägers mit angeformtem Ansatz für einen Trägheitssensor nach einem der Ansprüche 1 bis 5, **dadurch gekennzeichnet, daß** die Form einen Einsatz (130) aufweist, der die Form für den Ansatz (30) bildet und der um eine zur Schwenkachse (A) parallelen Achse (F), welche die Achse der kreiszylindrischen Fläche (22) des Trägers bildet, bezüglich einer Form (114) für den Träger (20) verdrehbar ist, so **daß** mit ein und derselben Spritzgießform Träger hergestellt werden können bei denen der Ansatz unter verschiedenen Winkeln (α) an der kreiszylindrischen Fläche (22) des Trägers angeformt ist.

12. Spritzgießform nach Anspruch 11, **dadurch gekennzeichnet, daß** die Spritzgießform wenigstens einen Verdränger (140) aufweist, zur Formung von Kodiermarken (33) am Träger (20), an denen erkennbar ist, in welcher Position der Ansatz (30) am Träger angebracht ist.

13. Spritzgießform zur Herstellung eines Sensorhebels mit angeformter Steuerklinke für einen Trägheitssensor nach einem der Ansprüche 2 bis 5, **dadurch gekennzeichnet, daß** die Form einen Einsatz aufweist, der die Form für die Steuerklinke (38) bildet und der um eine zur Schwenkachse (A) parallelen Achse (F), welche die Achse der kreiszylindrischen Fläche (36) des Sensorhebels (32) bildet, bezüglich einer Form für den Sensorhebel verdrehbar ist, so **daß** mit ein und derselben Spritzgießform Sensorhebel mit angeformter Steuerklinke hergestellt werden können bei denen die Steuerklinke unter verschiedenen Winkeln (α) an der zylindrischen Fläche des Sensorhebels angeformt ist.

14. Spritzgießform nach Anspruch 13, **dadurch gekennzeichnet, daß** die Spritzgießform wenigstens einen Verdränger zur Formung von Kodiermarken (35) am Sensorhebel (32) aufweist, an denen erkennbar ist, in welcher Position die Steuerklinke (38) am Sensorhebel angebracht ist.

## Claims

1. An inertia sensor (10) for vehicle-sensitive activation of a blocking mechanism on a belt retractor, comprising a mass body (28) held by a support (20), a sensor lever (32) resting on the mass body and mounted on the support for swiveling motion about an axis (A), a control pawl (38) being fitted to the sensor lever (32), the free end of the control pawl (38) defining a contact section (40) adapted to cooperate with a control disc (16) of the belt retractor, and comprising an appendix (30) configured on the support, by which the support can be secured to the belt retractor, the support (20) being provided with a circular cylindrical surface area (22), the axis of which runs parallel to the swivel axis (A), **characterized in that**
the appendix (30) is formed integrally with the circular cylindrical surface area (22), and the axis of the circular cylindrical surface area (22) runs through the center of gravity of the mass body (28).

2. The inertia sensor as set forth in claim 1, **characterized in that** the sensor lever (32) is provided with a circular cylindrical surface area (36), the axis of which runs parallel to the swivel axis (A) through the center of gravity of the mass body (28) and to which the control pawl (38) is fitted.

3. The inertia sensor as set forth in claim 1 or 2, **characterized in that** the appendix (30) defines a longitudinal axis (L) extending perpendicularly to the swivel axis (A) and passing through the contact section (40) of the control pawl (38) when the sensor (10) is in the activating condition, so that the support (20) can be secured by means of the appendix at various angles of rotation in relation to the longitudinal axis.

4. The inertia sensor as set forth in any of the preceding claims, **characterized in that** the sensor lever (32) is swivelingly mounted on the support (20) by means of two cogs (64) each having at its tip (65) a conical section (66) and, adjoining the latter, a circular cylindrical section (68), and each engaging holes (70) having at the bottom a conical section (72) and an adjoining circular cylindrical section (74).

5. The inertia sensor as set forth in any of the preceding claims, **characterized in that** the sensor lever (32) includes a supporting surface area (78) which is circular cylindrical with respect to the axis (A), that the support (20) is provided with ribs (80) having an outer contour which is cylindrical with respect to the axis (A), and that the outer contour of the ribs is slightly spaced away from the supporting surface area (78).

6. The inertia sensor as set forth in any of the preceding claims, **characterized in that** coding marks (33) are provided on the inertia sensor (10), which make it possible to recognize in which position the appendix (30) is fitted to the support (20).

7. The inertia sensor as set forth in any of claims 2 to 6, **characterized in that** coding marks (35) are provided on the inertia sensor (10), which make it possible to recognize in which position the control pawl (38) is fitted to the sensor lever (32).

8. A belt retractor comprising a housing and an inertia sensor as set forth in any of claims 1 to 5, **characterized in that** the appendix (30) is provided at its free end with a plate (50), and that provided in the housing (12) is a recess (58) in which the plate is non-rotatably mounted.

9. A belt retractor comprising a housing and an inertia sensor as set forth in any of claims 1 to 5, **characterized in that** the appendix (30) is cylindrical with respect to its longitudinal axis (L), and that provided in the housing (12) is a recess (42) in which the appendix of the sensor (10) is mounted to be rotatable about its longitudinal axis.

10. The belt retractor as set forth in claim 9, **characterized in that** a fastening means is provided by which a rotational position of the appendix (30) is fixed in the housing (12).

11. An injection mold for producing a support having an integrally molded appendix for an inertia sensor as set forth in any of claims 1 to 5, **characterized in that** the mold has an insert (130) which defines the mold for the appendix (30) and which is rotatable in relation to a mold (114) for the support (20) and about an axis (F) parallel to the swivel axis (A) and defining the axis of the circular cylindrical surface area (22) of the support, so that one and the same injection mold can be used to produce supports in which the appendix is molded integrally with the circular cylindrical surface area (22) of the support at various angles (α).

12. The injection mold as set forth in claim 11, **characterized in that** the injection mold includes at least one displacer (140) for forming coding marks (33) on the support (20), which make it possible to recognize in which position the appendix (30) is fitted to the support.

13. An injection mold for producing a sensor lever having an integrally molded control pawl for an inertia sensor as set forth in any of claims 2 to 5, **characterized in that** the mold has an insert which defines the mold for the control pawl (38) and which is rotatable in relation to a mold for the sensor lever and about an axis (F) parallel to the swivel axis (A) and defining the axis of the circular cylindrical surface area (36) of the sensor lever (32), so that one and the same injection mold can be used to produce sensor levers having an integrally molded control pawl in which the control pawl is molded integrally with the cylindrical surface area of the sensor lever at various angles (α).

14. The injection mold as set forth in claim 13, **characterized in that** the injection mold includes at least one displacer for forming coding marks (35) on the sensor lever (32), which make it possible to recognize in which position the control pawl (38) is fitted to the sensor lever.

## Revendications

1. Capteur inertiel (10) pour le déclenchement sensible au véhicule d'un mécanisme de blocage sur un enrouleur de ceinture, comportant un corps de masse (28) qui est retenu par un support (20), comportant un levier de capteur (32) reposant sur le corps de masse et monté pivotant autour d'un axe (A) sur le support, levier de capteur (32) sur lequel est monté un cliquet de commande (38) dont l'extrémité libre forme un tronçon de contact (40) qui peut coopérer avec un disque de commande (16) de l'enrouleur de ceinture, et comportant un talon (30) réalisé sur le support, par lequel le support peut être fixé sur l'enrouleur de ceinture, le support (20) étant pourvu d'une surface cylindrique circulaire (22) dont l'axe s'étend parallèlement à l'axe de pivotement (A), **caractérisé en ce que**
le talon (30) est moulé sur la surface cylindrique circulaire (22) et l'axe de la surface cylindrique circulaire (22) s'étend à travers le centre de gravité du corps de masse (28).

2. Capteur inertiel selon la revendication 1, **caractérisé en ce que** le levier de capteur (32) est pourvu d'une surface cylindrique circulaire (36) dont l'axe s'étend parallèlement à l'axe de pivotement (A) à travers le centre de gravité du corps de masse (28) et sur laquelle est monté le cliquet de commande (38).

3. Capteur inertiel selon la revendication 1 ou 2, **caractérisé en ce que** le talon (30) définit un axe longitudinal (L) qui est perpendiculaire à l'axe de pivotement (A) et qui traverse le tronçon de contact (40) du cliquet de commande (38) lorsque le capteur se trouve dans l'état de déclenchement, de sorte que le support (20) peut être fixé au moyen du talon sous différents angles de rotation par rapport à l'axe longitudinal.

4. Capteur inertiel selon l'une des revendications précédentes, **caractérisé en ce que** le levier de capteur (32) est monté pivotant sur le support (20) au moyen de deux tourillons (64) qui présentent à leur pointe (65) un tronçon (66) en forme de cône et un tronçon (68) cylindrique circulaire s'y raccordant, qui s'engagent chacun dans des alésages (70) présentant sur le fond un tronçon (72) en forme de cône et un tronçon (74) cylindrique circulaire s'y raccordant.

5. Capteur inertiel selon l'une des revendications précédentes, **caractérisé en ce que** le levier de capteur (32) présente une surface d'appui (78) cylindrique circulaire, **en ce qu'**il est prévu sur le support (20) des nervures (80) qui présentent un contour extérieur cylindrique à l'axe (A), et **en ce que** le contour extérieur des nervures et la surface d'appui (78) sont à faible distance l'un de l'autre.

6. Capteur inertiel selon l'une des revendications précédentes, **caractérisé en ce que** sur le capteur inertiel (10) sont prévues des marques de codage (33) qui permettent de reconnaître la position dans laquelle le talon (30) est monté sur le support (20).

7. Capteur inertiel selon l'une des revendications 2 à 6, **caractérisé en ce que** sur le capteur inertiel (10) sont prévues des marques de codage (35) qui permettent de reconnaître la position dans laquelle le cliquet de commande (38) est monté sur le levier de capteur (32).

8. Enrouleur de ceinture comportant un boîtier et un capteur inertiel selon l'une des revendications 1 à 5, **caractérisé en ce que** le talon (30) est pourvu d'une plaque (50) à son extrémité libre, et **en ce que** dans le boîtier (12) est prévu un évidement (58) dans lequel la plaque est montée solidaire en rotation.

9. Enrouleur de ceinture comportant un boîtier et un capteur inertiel selon l'une des revendications 1 à 5, **caractérisé en ce que** le talon (30) est cylindrique par rapport à son axe longitudinal (L), et **en ce que** dans le boîtier (12) est prévu un évidement (42) dans lequel le talon du capteur (10) est monté rotatif autour de son axe longitudinal.

10. Enrouleur de ceinture selon la revendication 9, **caractérisé en ce qu'**il est prévu un moyen de fixation par lequel une position de rotation du talon (30) est fixée dans le boîtier (12).

11. Moule de moulage par injection pour fabriquer un support avec talon moulé pour un capteur inertiel selon l'une des revendications 1 à 5, **caractérisé en ce que** le moule présente un insert (130) qui forme le moule pour le talon (30) et qui peut tourner autour d'un axe (F) parallèle à l'axe de pivotement (A) et formant l'axe de la surface cylindrique circulaire (22) du support, par rapport à un moule (114) pour le support (20), de telle sorte qu'avec un seul moule de moulage par injection, on peut fabriquer des supports dans lesquels le talon est moulé sur la surface cylindrique circulaire (22) du support, sous différents angles (α).

12. Moule de moulage par injection selon la revendication 11, **caractérisé en ce que** le moule de moulage par injection présente au moins un déplaceur (140) pour façonner des marques de codage (33) sur le support (20) qui permettent de reconnaître la position dans laquelle le talon (30) est monté sur le support.

13. Moule de moulage par injection pour fabriquer un levier de commande moulé pour un capteur inertiel selon l'une des revendications 2 à 5, **caractérisé en ce que** le moule présente un insert (130) qui forme le moule pour le cliquet de commande (38) et qui peut tourner autour d'un axe (F) parallèle à l'axe de pivotement (A) et formant l'axe de la surface cylindrique circulaire (36) du levier de capteur (32), par rapport à un moule pour le levier de capteur, de telle sorte qu'avec un seul moule de moulage par injection, on peut fabriquer des leviers de capteurs avec cliquet de commande moulé, dans lesquels le cliquet de commande est moulé sur la surface cylindrique circulaire (22) du levier de capteur, sous différents angles (α).

14. Moule de moulage par injection selon la revendication 13, **caractérisé en ce que** le moule de moulage par injection présente au moins un déplaceur pour façonner des marques de codage (35) sur le levier de capteur (32) qui permettent de reconnaître la position dans laquelle le cliquet de commande (38) est monté sur le levier de capteur.
